# EUROPEAN PATENT SPECIFICATION

(11) **EP 4 456 012 B1**
(45) Date of publication and mention of the grant of the patent: **22.04.2026**
(21) Application number: 23170426.3
(22) Date of filing: 27.04.2023
(51) Int. Cl.: G06V 20/40, G06V 20/58, G08G 1/16

(54) **A METHOD AND SYSTEM FOR DETERMINING WHETHER AN APPARATUS IS READY TO MOVE**
VERFAHREN UND SYSTEM ZUR BESTIMMUNG DER TRANSPORTBEREITSCHAFT EINER VORRICHTUNG
PROCÉDÉ ET SYSTÈME POUR DÉTERMINER SI UN APPAREIL EST PRÊT À SE DÉPLACER

(43) Date of publication of application: 30.10.2024
(73) Proprietor: TOYOTA JIDOSHA KABUSHIKI KAISHA, Toyota-shi, Aichi-ken, 471 8571 (JP)
(72) Inventor: VAN LOOCK, Mark, 1140 BRUSSELS (BE); ABDELKAWY, Hazem, 1140 BRUSSELS (BE); SUNDRAM, Jugesh, 1140 BRUSSELS (BE); KNAPP, Jakob, 1140 BRUSSELS (BE); MEIER, Sven, 1140 BRUSSELS (BE)
(74) Representative: Cabinet Beau de Loménie

(56) References cited:
- EP-A2- 1 993 064
- US-A1- 2003 012 428
- US-A1- 2021 063 578
- LATEEF FAHAD ET AL: "Temporal Semantics Auto-Encoding based Moving Objects Detection in Urban Driving Scenario", 2021 IEEE INTELLIGENT VEHICLES SYMPOSIUM (IV), IEEE, 11 July 2021 (2021-07-11), pages 1352 - 1358, XP034005261, DOI: 10.1109/IV48863.2021.9575796
- KRISTOF VAN BEECK: "The automatic blind spot camera: hard real-time detection of moving objects from a moving camera", LIRIAS (OTHER), 30 September 2016 (2016-09-30), XP055669386, Retrieved from the Internet <URL:https://core.ac.uk/download/pdf/45292112.pdf>
- ADELI VIDA ET AL: "Socially and Contextually Aware Human Motion and Pose Forecasting", IEEE ROBOTICS AND AUTOMATION LETTERS, IEEE, vol. 5, no. 4, 21 July 2020 (2020-07-21), pages 6033 - 6040, XP011801896, DOI: 10.1109/LRA.2020.3010742
- PAUL SCOVANNER ET AL: "A 3-dimensional sift descriptor and its application to action recognition", PROCEEDINGS OF THE 15TH INTERNATIONAL CONFERENCE ON MULTIMEDIA , MULTIMEDIA '07, 1 January 2007 (2007-01-01), New York, New York, USA, pages 357, XP055166027, ISBN: 978-1-59-593702-5, DOI: 10.1145/1291233.1291311
- JUN YANG ET AL: "Evaluating bag-of-visual-words representations in scene classification", PROCEEDINGS OF THE INTERNATIONAL WORKSHOP ON WORKSHOP ON MULTIMEDIA INFORMATION RETRIEVAL , MIR '07, 1 January 2007 (2007-01-01), New York, New York, USA, pages 197, XP055155915, ISBN: 978-1-59-593778-0, DOI: 10.1145/1290082.1290111

## Description

### BACKGROUND OF THE INVENTION

### 1. Field of the invention

The present disclosure relates to the field of automation, and in particular to a method and system for determining whether an apparatus is ready to move. The method and system may find applications in all kinds of industries, including the automotive industry.

### 2. Description of Related Art

In recent years, there has been an increasing demand for automation throughout all fields of technology. In particular, the field of autonomous vehicles has seen great developments to partly or fully automate the driving tasks conventionally performed by the driver. However, in a vehicle, and more particularly in shared vehicles such as buses, shuttles, trains, etc., the driver (or, as the case may be, the conductor or the operator) usually performs other tasks than purely driving tasks, e.g. supervising opening and closing of doors, deciding whether the vehicle can depart, helping disabled people, dealing with emergency situations and the like.

Thus, there is a need for further automation, in particular as regards determining whether a vehicle, or more generally an apparatus, is ready to move.

The following references disclose methods relating to the field of computer vision:
[REF. 1] Zheng Ge et al., YOLOX: Exceeding YOLO Series in 2021, arXiv:2107.08430v2
[REF. 2] Nicolai Wojke et al., Simple Online and Realtime Tracking with a Deep Association Metric, arXiv:1703.07402v1
[REF. 3] Liang-Chieh Chen et al., Rethinking Atrous Convolution for Semantic Image Segmentation, arXiv:1706.05587v3
[REF. 4] D. Vega-Hernández, A. M. Herrera-Navarro and H. Jiménez-Hernández, Background Subtraction Model Based on Adaptable MOG, 2012 IEEE Ninth Electronics, Robotics and Automotive Mechanics Conference, Cuernavaca, Mexico, 2012, pp. 54-59, doi: 10.1109/CERMA.2012.17.
[REF. 5] D. Fierens, G. Van den Broeck, J. Renkens, D. Shterionov, B. Gutmann, I. Thon, G. Janssens and L. De Raedt. Inference and learning in probabilistic logic programs using weighted Boolean formulas. Theory and Practice of Logic Programming, 15:3, pp. 358 - 401, Cambridge University Press, 2015. I

Also acknowledged is the following prior art: LATEEF FAHAD ET AL: "Temporal Semantics Auto-Encoding based Moving Objects Detection in Urban Driving Scenario", 2021 IEEE INTELLIGENT VEHICLES SYMPOSIUM (IV), IEEE, 11 July 2021 (2021-07-11), pages 1352-1358, XP034005261, DOI: 10.1109/IV48863.2021.9575796
Kristof Van Beeck: "The automatic blind spot camera: hard real-time detection of moving objects from a moving camera", Lirias (Other), 30 September 2016 (2016-09-30), XP055669386, Retrieved from the Internet: URL:https://core.ac.uk/download/pdf/45292112.pdf
US 2021/063578 A1 (WEKEL TILMAN [US] ET AL) 4 March 2021 (2021-03-04)
ADELI VIDA ET AL: "Socially and Contextually Aware Human Motion and Pose Forecasting", IEEE ROBOTICS AND AUTOMATION LETTERS, IEEE, vol. 5, no. 4, 21 July 2020 (2020-07-21), pages 6033-6040, XP011801896, DOI: 10.1109/LRA.2020.3010742.

### SUMMARY

The invention can be summarized as defined in the appended claims.

In this respect, the present disclosure relates to a computer-implemented method for determining whether an apparatus is ready to move as defined in claim 1, the computer-implemented method comprising:
- obtaining a sequence of images relating to the apparatus;
- extracting motion information from the sequence of images, wherein the motion information comprises information about motion of at least one object in the sequence of images;
- determining whether the apparatus is ready to move based on the motion information.

The steps of the method may be carried out by one or more processors. The method is referred to hereinafter as the determining method.

The apparatus may have one or more moving parts. The "apparatus is ready to move" means that at least one of the one or more moving parts is ready to move.

The obtaining the sequence of images may comprise acquiring the sequence, e.g. through an image acquisition module such as a camera, or getting an already acquired sequence from a database, e.g. a local or distant server or the like.

Besides, the obtaining step may comprise any desired preprocessing of the sequence of images, e.g. rectification, cropping, resizing, rotating, etc. or a combination thereof.

The sequence of images comprises a plurality of images. The sequence of images may comprise a plurality of successive frames of a video clip. Alternatively, the sequence of images may comprise a plurality of non-successive frames of a video clip, e.g. selected at a given sampling frequency (e.g. every third frame of the video clip). The images of the sequence may not be sampled at a regular frequency.

The sequence of images relating to the apparatus means that the sequence of images shows at least a portion of the apparatus and/or at least a portion of the apparatus' environment with which the apparatus may interact. For instance, if the apparatus is a vehicle, the sequence of images may show the vehicle cabin or the vehicle surroundings. If the apparatus is a robotic system, the sequence of images may show at least partially the range of operation of the robotic system. By monitoring a sequence of images relating to the apparatus, the determining method can determine whether allowing the apparatus to move would have any detrimental effect on its environment.

Specifically, the determining method extracts motion information from the sequence of images. The motion information comprises information about motion of at least one object that is shown in part or all of the sequence of images. In the present disclosure, an object is to be understood as a generic term meaning any obstacle for the apparatus, including a living being (e.g. a human being, an animal, a plant) or an item. Information about motion may comprise a position, a speed, an acceleration, in one or more dimensions, or any combination thereof. Alternatively or in addition, information about motion may comprise an indicator qualifying an amount of motion and/or a type of motion of the object.

Hereinafter, unless otherwise stated, "the object" refers to the at least one object. More generally, as used herein, for conciseness and unless the context indicates otherwise, "a", "an", and "the" are intended to refer to "at least one" or "each" and to include plural forms as well. Conversely, generic uses of plural include singular forms as well.

The motion information is taken into account to determine whether the apparatus is ready to move. As the motion information is extracted from a sequence of images, the reliability of the determining method is enhanced. By checking the motion around and/or in the apparatus, it is ensured that the initial movement of the apparatus would not create a big surprise or trigger any accident. Therefore, the proposed determining method provides appropriate automation for determining whether the apparatus is ready to move, and reduces the need for human oversight. Based on this determination, further operations, such as actual movement of the apparatus, may be carried out.

Optionally, the extracting comprises detecting the at least one object in the sequence of images, and estimating a motion of the at least one object based on the sequence of images. Object detection is known *per se* in the art. Estimating a motion of the detected object may rely on an evolution of a geometrical property of the object over the sequence of images, such as one or more feature points of the object, a center of gravity of the object, on a bounding box of the object, etc.

Optionally, the estimating comprises deriving a global motion from the sequence of images and associating one or more portions of the global motion to one or more of the detected at least one objects. In this manner, instead of first determining the objects and then individually estimating their respective motions, the motion information can be determined more accurately, even if the objects overlap.

Optionally, the global motion is derived based on a semantic mask obtained from the sequence of images. A semantic mask is a mask, i.e. an element showing some portions of an image while masking the other pixels of the image, for which the portions shown are determined based on a semantic segmentation of the image. Semantic segmentation and mask calculation are known *per se* in the art of image processing and simple to use. As a consequence, the proposed method is efficient and robust.

Optionally, the global motion comprises a map of a ratio of motion or amount of motion throughout the sequence of images. The map may allocate a ratio/amount of motion to each pixel or to areas of each of the images. By allocating the ratio/amount of motion to pixels or areas of the image, instead of allocating motion on an object level, enables to properly identify cases in which subparts of the objects have excessive motion while the overall movement of the object is limited. As a consequence, using such a map improves the accuracy of the method.

Optionally, the at least one object comprises at least one of a human, an animal, a plant or an item.

Optionally, the apparatus is a vehicle or manufacturing equipment. Vehicles include, without limitation, cars, buses, shuttles, trains, elevators, boats, aircrafts, cable transports, etc. Manufacturing equipment include, without limitation, manufacturing lines, robotic systems, etc. Accidental movements of vehicles or manufacturing equipment may have dramatic consequences. Accordingly, the determining method improves the safety of these apparatuses.

Optionally, the method comprises tracking the at least one object throughout the sequence. This may be carried out by tracking any relevant portion and/or property of the object, e.g. a bounding box thereof.

Optionally, the method further comprises running a classification model to output, based on the motion information, an indicator representative of whether the at least one object is moving in a manner that makes movement of the apparatus unsafe.

The classification model may be a machine learning model such as a decision tree, or another type of model. The classification model may take the motion information as an input and output the indicator.

The indicator is representative of the extent to which the object's motion decreases the object's readiness to a (possibly sudden) movement of the apparatus. For instance, it may be considered that movement of the apparatus would be unsafe if it is determined that an object moves a lot, because the object is likely not to be stable and to be turned over or knocked over by the movement of the apparatus. Conversely, object's motions which do not impact the object's stability may not be considered as making movement of the apparatus unsafe. When the indicator indicates that movement of the apparatus is unsafe, it may be determined that the apparatus is not ready to move. Thanks to the classification model, the determining method can make a clear determination of whether the apparatus is ready to move.

Optionally, the method comprises filtering out in-place motion from the motion information. As a consequence, in-place motion is ignored from the motion information. In this way, the motion information may convey information more precisely about the stability of the object. In-place motion includes motion of an object that does not change at least one of its global position, its center of gravity or its attitude (e.g. angular position) more than a threshold. For example, actions such as reading or waiving to someone may qualify as in-place motion.

The determining comprises outputting at least one probability representative of whether the apparatus is ready to move. By outputting a probability, the determining method can be simply integrated to other systems and makes operation of the apparatus easier. Instead of a probability, the determining may comprises outputting a binary flag.

The determining includes applying a logic-based algorithm on a plurality of pieces of the motion information. A logic-based algorithm is an algorithm that is for instance rule-based and/or probability-based, and that applies these rules and/or probabilities to a plurality of inputs, i.e. plurality of pieces of the motion information, in order to determine the output. By combining motion detection methods and a logic-based algorithm based on a plurality of pieces of the motion information, the method is not only more reliable because based on plurality of detections, but also simpler because the pieces of the motion information are combined by a logic-based algorithm. This avoids the need of complex models to handle the wide variety of situations. In contrast, fusing the pieces of the motion information through a logic-based algorithm enables to leverage the benefits of simple detections and the reliably of logic-based reasoning which brings human knowledge to the method. This architecture also brings self-adaptability to the determining method, e.g. to unseen types of movements.

Optionally, the determining method is carried out in real-time, in order to determine whether the apparatus is ready to move based on a current situation of the environment around the apparatus.

The present disclosure is further directed to a system for determining whether an apparatus is ready to move as defined in claim 10, comprising:
- an obtaining module for obtaining a sequence of images relating to the apparatus;
- an extractor for extracting motion information from the sequence of images, wherein the motion information comprises information about motion of at least one object in the sequence of images;
- a determination module for determining whether the apparatus is ready to move based on the motion information.

The system, referred to hereinafter as the determining system, may be configured to carry out the above-mentioned determining method, and may have part or all of the above-described features. The determining system may have the hardware structure of a computer.

The present disclosure is further directed to a vehicle comprising the above-described determining system and a camera, wherein the obtaining module is configured to obtain the sequence of images from the camera. The camera may be an inside camera, i.e. a camera acquiring images inside the vehicle, e.g. inside the vehicle cabin.

Optionally, the vehicle is an autonomous vehicle. The determining system may fulfil non-driving functions of the autonomous vehicle.

The present disclosure is further related to a computer program set including instructions for executing the steps of the above described determining method when said program is executed by at least one computer. The programs of this set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above described determining method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a general flowchart of a method for determining whether an apparatus is ready to move according to an embodiment.
- Fig. 2 is a detailed flowchart of a method for determining whether an apparatus is ready to move according to an embodiment.
- Fig. 3 is a side view of a vehicle according to an embodiment.

### DETAILED DESCRIPTION OF EMBODIMENTS

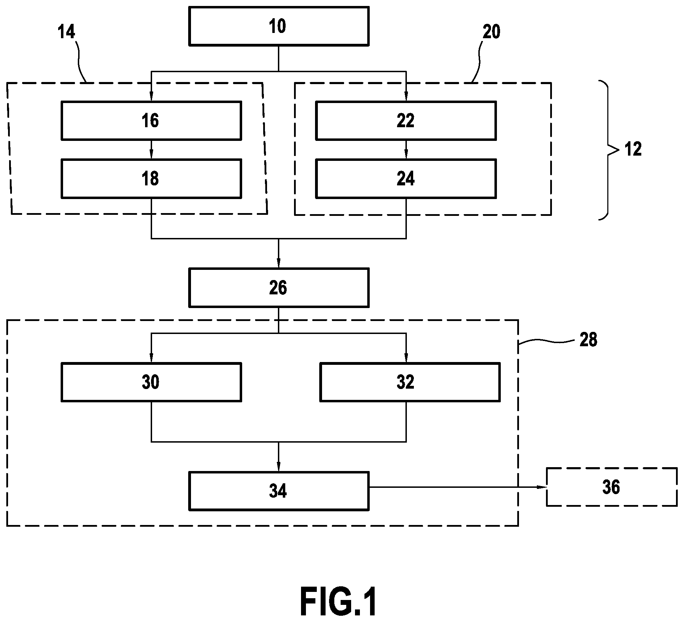

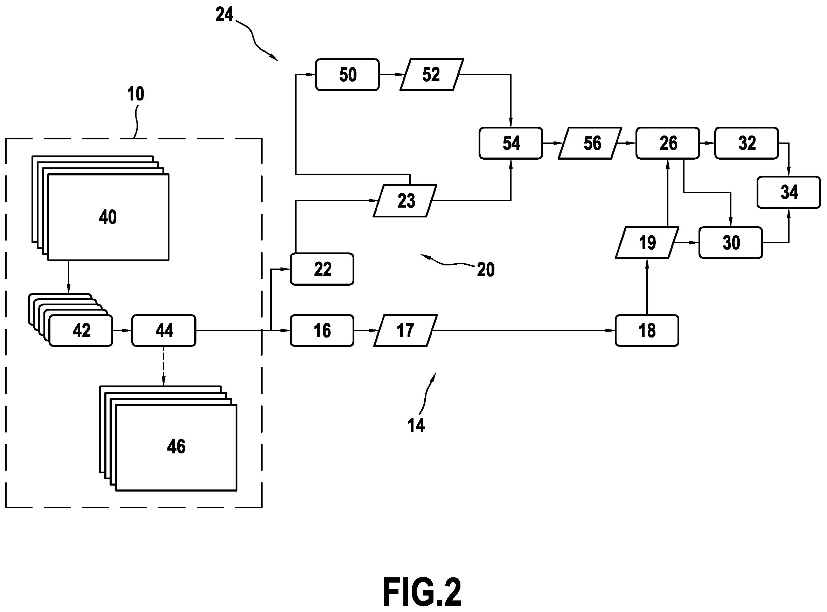

A method for determining whether an apparatus is ready to move is described with reference to Figs. 1 and 2. In this embodiment, the apparatus is a vehicle. However, the following description can be transposed to other types of apparatuses, such as manufacturing equipment. Figure 1 shows an overview of the method, whereas Fig. 2 illustrates an embodiment in more details.

With reference to Fig. 1, as stated above, the determining method comprises a step 10 of obtaining a sequence of images relating to the apparatus. Step 10 may include any appropriate preprocessing of the images for them to be ready for the subsequent steps of the determining method.

The determining method further comprises a step 12 of extracting motion information from the sequence of images. Motion information comprises information about motion of at least one object in the sequence of images. In the following, it is assumed for conciseness that the object is a person, however, the object may be an animal, a plant or an item. As the images may show a plurality of objects, the extracted motion information may relate to a plurality of objects. Besides, the extracting may target specific objects, e.g. humans, pets, luggage, etc., while treating other objects (e.g. seats, seat belt, holding bars, etc.) as background.

In a possible application, the determining method is configured to determine, based on a sequence of images inside a vehicle, whether the occupants of the vehicle are immobile or stable enough for the vehicle to depart without running the risk of making one of them fall. Although departing is mentioned, other types of movements are encompassed, e.g. accelerating, braking, turning, etc. More generally, the relevant movements depend on the type of apparatus.

For instance, step 12 may comprise an object detection step 14 and a motion calculation step 20. The object detection step 14 aims to detect the at least one object (e.g. the person) in the sequence of images. For instance, the object detection step 14 may comprise a step 16 of identifying one or more objects in the sequence of images, and optionally a step 18 of tracking the identified objects throughout the sequence of images.

Besides, the motion calculation step 20 may comprise deriving a global motion from the sequence of images. Specifically, the motion calculation step 20 may comprise a step 22 of semantic segmentation of the sequence of images, in order to separate the objects from one another in the images, and a step 24 of estimating the global motion of the segmented objects.

The determining method may take the output of the object detection step 14, namely where the objects are in the images of the sequence, and the output of the motion calculation step 20, namely the aforementioned global motion, and associate one or more portions of the global motion to one or more of the detected at least one objects in a motion association step 26. The motion association step 26 outputs the motion information.

Then, at step 28, based on the motion information, the determining method determines whether the apparatus is ready to move. For instance, the determining method, e.g. step 28, may comprise a step 30 of filtering out in-place motion from the motion information outputted from step 26, e.g. in order to keep only stability-related motion information.

Besides, the determining method, e.g. step 28, may comprise a step 32 of running a classification model on the motion information outputted from step 28 in order to classify the movements depending on their impact on the decision to allow the apparatus to move or not. For instance, the classification model may classify the movements into stability-related movements and stability-unrelated movements, based on whether the motion information affects the person's stability. The classification model may output an indicator representative of whether the at least one object is moving in a manner that makes movement of the apparatus (e.g. departure of the vehicle) unsafe.

The respective outputs of steps 30, 32 may be combined in order to determine whether the apparatus is ready to move, at step 34. Step 34 may issue a flag or a probability 36 indicating whether the apparatus is ready to move. Thus, departure of the vehicle can be decided automatically and reliably.

An embodiment of the determining method is described in more details with reference to Fig. 2. However, as can be understood from Fig. 1, the architecture of the proposed determining method is modular and variants of each module may be appropriately used by the skilled person, without departing from the principles expressed herein. As detailed hereinafter, the determining method may comprise using at least one machine learning model.

Figure 2 illustrates an example for carrying out step 10 of obtaining a sequence of images relating to the apparatus. Here, a plurality of video frames 40 may be obtained, e.g. with a camera. The camera may be a fisheye camera. A fisheye camera is known *per se* in the art and enables to acquire a large field of view. However, other types of cameras are envisaged. In the vehicle example, the camera may be mounted inside the vehicle. The camera may show the cabin inside the vehicle, for instance to monitor the occupants' movements for carrying out the determining method.

The images of the sequence may be RGB (red/green/blue) images, or more generally single- or multi-channeled images. An RGB image of a scene comprises pixels having a red value, a green value and a blue value, in order to form colors (including black and white or greyscale) representative of the colors that the scene has. A single-channeled image is an image in which each pixel has a color or intensity represented by a single value, and a multi-channeled image is an image in which each pixel has a color or intensity represented by multiple values. Greyscale is an example of a single-channeled scale while RGB is an example of a multi-channeled scale.

At step 42, the plurality of video frames 40 are acquired. Step 42 may be carried out in real-time. Step 42 may acquire all the available video frames 40 or sample them at any desired rate.

As the case may be, the determining method may comprise a step 44 of preprocessing the sequence of images. For instance, step 44 may include reprojection or rectification of the sequence of images, e.g. to transform the images from fisheye images to rectified images. Other operations such as cropping, resizing, rotating, compressing, etc. are possible, alone or in combination. Step 44 outputs the preprocessed images 46 (e.g. rectified images) in view of extracting motion information therefrom.

Specifically, the preprocessed images 46 are output to the object detection step 14 and the motion calculation step 20. While the object detection step 14 and the motion calculation step 20 are represented in parallel, as they are independent from each other, the object detection step 14 and the motion calculation step 20 could be performed sequentially.

As indicated above, in the object detection step 14, the determining method may first proceed to step 16 of identifying one or more objects in the sequence of images, here in the preprocessed images 46. Step 16 may be applied individually to the respective preprocessed images 46. Step 16 may rely on an object detector model, e.g. a person detector such as YoloX [REF. 1]. Many object detector models such as YoloX are trained based on rectified images, which is why it is necessary to rectify the fisheye images in such a case. However, if the object detector model is able to work from fisheye images, e.g. thanks to fine-tuning on such images, there is no need for rectification. Thus, step 44 of preprocessing is optional and basically depends on the requirements of step 16 of identifying one or more objects in the sequence of images.

The object detector model may output a property enabling identification of the objects within the preprocessed images 46, e.g. a contour, a center of gravity, etc. In this example, the object detector model outputs a bounding box 17 for each object in each image. The bounding box 17 may be a two-dimensional or three-dimensional bounding box.

The bounding box 17 serves as an input for step 18 of tracking the identified objects throughout the sequence of images. Step 18 may rely on an object tracker model such as DeepSort [REF. 2]. Tracking the bounding box (or any other property representative of a detected object) enables to establish a relationship between the bounding boxes from one frame to another. In order words, it enables to determine which objects are moving.

Thus, in this embodiment, step 18 outputs tracked person bounding boxes 19. More generally, step 14 outputs object detections over the sequence of images.

As indicated above, in the motion calculation step 20, the determining method may first proceed to a step 22 of semantic segmentation of the sequence of images, here the preprocessed images 46. Step 22 may rely on a semantic segmentation model such as DeepLabv3 [REF. 3]. In particular, the semantic segmentation model may be configured to output a semantic mask 23 obtained from the sequence of images, and in particular respective semantic masks 23 for the respective images of the sequence of images. The semantic mask 23 may be a binary mask. Specifically, the semantic mask may show the objects (e.g. persons) detected in the images, while masking everything else, e.g. the walls, floor, seats and windows of the vehicle cabin.

The semantic masks 23 serve as an input for step 24 of estimating the global motion of the segmented objects. The global motion may comprise a map of a ratio of motion or amount of motion throughout the sequence of images.

For instance, in order to obtain such a map, step 24 may comprise a step 50 of subtracting a semantic mask of one image from a semantic mask of an adjacent image (e.g. an immediately preceding or following image in the sequence). The displacement between two adjacent semantic masks shows the pixels of the detected objects which moved between the two images. Therefore, this subtraction provides information about the global motion of the detected objects. Obtaining the map based on the semantic masks enables to constrain the area where the movement needs to be calculated. This improves the robustness of the motion estimation, as motion in the (irrelevant) background is filtered out.

Step 50 may rely on a background subtraction model such as MOG [REF. 4]. In particular, step 50 may output a global motion map 52.

Step 24 may further comprise step 54 of filtering the global motion map 52. In order to filter out the light changes and environmental sudden motions, the semantic masks 23 are applied to the global motion map 52. In doing so, step 54 outputs a motion map 56 which is more robust and allocates, for each image, the amount or ratio of motion to a specific person. Thus, the motion map 56 provides the global motion of the segmented objects.

In this embodiment, the above-described motion association step 26 may take the motion map 56 and the tracked person bounding boxes 19 as inputs, and associates one or more portions of the global motion, described by the motion map 56, to one or more of the detected objects, described by the tracked person bounding boxes 19. Thus, the association step may combine the pixelwise information from the motion map 56 with the region-based detection from the tracked person bounding boxes 19, in order to derive the amount of motion per (individual).

Thus, the determining method can estimate a motion of the at least one object based on the sequence of images.

The determining method then proceeds to step 30 of filtering out in-place motion. As mentioned above, in-place motion stands for movements of an object which do not change its global position. For instance, movement of an object may be determined as in-place motion if the amount or ratio of displacement of a bounding box is less than a threshold. For instance, a ratio of displacement for a bounding box may be computed as 1-IoU, wherein IoU stands for the intersection over union ratio of the bounding box areas in two successive frames. Conversely, if the amount or ratio of displacement is higher than a threshold, it may be determined that the object (e.g. person) is globally moving within the vehicle.

In parallel, the determining method may proceed to step 32 of running a classification model. In this example, the classification model is a decision tree. For instance, step 32 may use a custom-built decision tree, which is known *per se* by the skilled person. The decision tree may be a machine learning model configured to take the estimated motion into account and to output, based on the estimated motion (corresponding to the motion information), an indicator representative of whether the at least one object is moving in a manner that makes movement of the apparatus unsafe.

In an example, the estimated motion comprises masks and the classification model may be configured to determine a contour of the pixels shown by the masks and to derive the area defined within this contour. On that basis, the classification model may be trained to determine the above-mentioned indicator.

At step 34, the determining method determines whether the apparatus is ready to move. Basically, step 34 combines the indicator provided by the classification model at step 32 with the in-place-motion-filtered motion information of step 30, in order to limit the impact of in-place motion on the determination of the method.

Step 34 comprises applying a logic-based algorithm on a plurality of pieces of the motion information, namely the indicator of step 32 and the in-place-motion-filtered motion information of step 30. The logic-based algorithm is a probabilistic reasoning with appropriate inference rules. For instance, step 34 may rely on a logic-based engine such as ProbLog [REF. 5]. However, other logic-based algorithms may be used, based e.g. on binary (Boolean) logic, fuzzy logic, etc.

For instance, the inference rules may describe a probabilistic model for decision-making based on the plurality of pieces of information. In an example, the decision tree judgment (i.e. the indicator of step 32) is represented by two predicates, dTREE_GO with e.g. a 0.5 probability and dTREE_STOP with e.g. a 0.5 probability. These predicates represent the likelihood of the method deciding whether the apparatus is ready to move, based on the decision tree model. The bounding box reasoner judgment (i.e. the in-place-motion-filtered motion information of step 30) is represented by three predicates: bReasoner_INPLACE, bReasoner_MOVINGPERSON, and bReasoner_NEWPERSON, with respective probabilities of e.g. 0.4, 0.4, and 0.2. These predicates represent the method's assessment of the current situation based on a bounding box reasoner, which could be evaluating the position or movement of people in a scene.

In this example, the inference rules may combine the decision tree and bounding box reasoner judgments to make a final determination for the determining method. This final determination may be represented by two predicates, ai_conductor_GO and ai_conductor_STOP, representing the method deciding whether the apparatus is ready to move or not, respectively. These rules combine the different predicates from the decision tree and bounding box reasoner with various probabilities, resulting in a set of possible outcomes. For example, if the decision tree suggests that the apparatus is ready to move and the bounding box reasoner detects a person in place (i.e. subject to in-place motion), there is e.g. a 0.9 probability for the AI system to proceed. These combinations allow the determining method to make more nuanced determinations based on both the decision tree's analysis and the bounding box reasoner's assessment of the situation.

Step 34 may output any type of determination of whether the apparatus is ready to move, including at least one probability representative of whether the apparatus is ready to move.

Experiments carried out by the inventors showed that the proposed determining method achieved an accuracy of more than 80% good judgments over 200 real-life videos; good judgments mean that the determining method accurately determined whether the vehicle was ready to depart, as compared to what a human supervisor would have concluded.

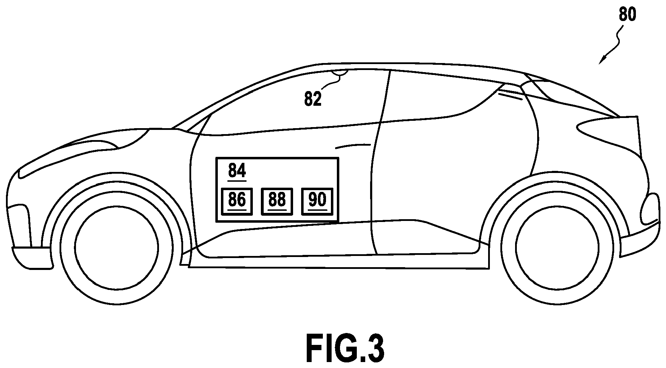

Fig. 3 shows a vehicle 80 comprising a camera 82 and a determining system 84 for determining whether the vehicle 80 is ready to move. The determining system comprises an obtaining module 86 for obtaining a sequence of images relating to the vehicle 80; an extractor 88 for extracting motion information from the sequence of images, wherein the motion information comprises information about motion of at least one object in the sequence of images; and a determination module 90 for determining whether the vehicle 80 is ready to move based on the motion information.

The determining system 84 may comprise an electronic circuit, a processor (shared, dedicated, or group), a combinational logic circuit, a memory that executes one or more software programs, and/or other suitable components that provide the described functionality. In other words, the determining system 84 may be a computer device. The determining system 84 may be connected to a memory (recording medium), which may store data, e.g. a computer program which when executed, carries out the assisting method according to the present disclosure.

The determining system 84, in particular the obtaining module 86, has an input for receiving a digital image or a stream of digital images. In particular, the determining system 84, in particular the obtaining module 86, may be connected to an optical sensor, in particular one or more digital cameras, e.g. the above-mentioned camera 82 which may be a fisheye camera. The digital camera is configured such that it can record a scene, and in particular output digital data to the determining system 84, in particular the obtaining module 86.

If the determining method is to be carried out in real time, the at least one image may be acquired in real time by an image acquisition module, such as a video acquisition module, e.g. camera 82 or the like (video cameras, photo cameras, etc.). Alternatively or in addition, the at least one image may be acquired beforehand, and obtained by the determining system 84 later, e.g. in case of post-processing of the filmed process.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for determining whether an apparatus is ready to move, the computer-implemented method comprising:
- obtaining (10) a sequence of images relating to the apparatus;
- extracting (12) motion information from the sequence of images, wherein the motion information comprises information about motion of at least one object in the sequence of images;
- determining (28) whether the apparatus is ready to move based on the motion information, wherein the determining comprises applying (34) a probabilistic reasoning with inference rules on a plurality of pieces of the motion information and outputting at least one probability (36) representative of whether the apparatus is ready to move.

2. The method of claim 1, wherein the extracting comprises detecting (14) the at least one object in the sequence of images, and estimating a motion of the at least one object based on the sequence of images.

3. The method of claim 2, wherein the estimating (20) comprises deriving a global motion from the sequence of images and associating (26) one or more portions of the global motion to one or more of the detected at least one objects, wherein the global motion comprises a map of a ratio of motion or amount of motion (56) throughout the sequence of images.

4. The method of claim 3, wherein the global motion is derived based on a semantic mask (23) obtained from the sequence of images.

5. The method of any one of claims 1 to 4, wherein the at least one object comprises at least one of a human, an animal, a plant or an item, or wherein the apparatus is a vehicle (80) or manufacturing equipment.

6. The method of any one of claims 1 to 5, comprising tracking (18) the at least one object throughout the sequence.

7. The method of any one of claims 1 to 6, further comprising running (32) a classification model, such as a decision tree, to output, based on the motion information, an indicator representative of whether the at least one object is moving in a manner that makes movement of the apparatus unsafe.

8. The method of any one of claims 1 to 7, further comprising filtering out (30) in-place motion from the motion information.

9. The method of any one of claims 1 to 8, wherein the inference rules describe a probabilistic model for decision-making based on the plurality of pieces of the motion information.

10. A system (84) for determining whether an apparatus is ready to move, comprising:
- an obtaining module (86) for obtaining a sequence of images relating to the apparatus;
- an extractor (88) for extracting motion information from the sequence of images, wherein the motion information comprises information about motion of at least one object in the sequence of images;
- a determination module (90) for determining whether the apparatus is ready to move based on the motion information, wherein the determining comprises applying (34) a probabilistic reasoning with inference rules on a plurality of pieces of the motion information and outputting at least one probability (36) representative of whether the apparatus is ready to move.

11. A vehicle (80) comprising the system (84) of claim 10 and a camera (82), such as an inside camera, wherein the obtaining module (86) is configured to obtain the sequence of images from the camera (82), and optionally wherein the vehicle (80) is an autonomous vehicle.

12. A computer program set including instructions for executing the steps of the method of any one of claims 1 to 9 when said program set is executed by at least one suitable apparatus.

13. A recording medium readable by at least one computer and having recorded thereon at least one computer program including instructions for executing the steps of the method of any one of claims 1 to 9 on a suitable apparatus.

## Patentansprüche

1. Computerimplementiertes Verfahren zum Bestimmen, ob eine Vorrichtung bewegungsbereit ist, wobei das computerimplementierte Verfahren umfasst:
- Erhalten (10) einer Sequenz von Bildern, die sich auf die Vorrichtung beziehen,
- Extrahieren (12) von Bewegungsinformationen aus der Sequenz von Bildern, wobei die Bewegungsinformationen Informationen über die Bewegung von mindestens einem Gegenstand in der Sequenz von Bildern umfassen,
- Bestimmen (28), ob die Vorrichtung bewegungsbereit ist, basierend auf den Bewegungsinformationen, wobei das Bestimmen das Anwenden (34) einer probabilistischen Schlussfolgerung mit Inferenzregeln an mehreren Stücken der Bewegungsinformationen und das Ausgeben von mindestens einer Wahrscheinlichkeit (36), die dafür repräsentativ ist, ob die Vorrichtung bewegungsbereit ist, umfasst.

2. Verfahren nach Anspruch 1, wobei das Extrahieren das Erkennen (14) des mindestens einen Gegenstands in der Sequenz von Bildern und das Schätzen einer Bewegung des mindestens einen Gegenstands basierend auf der Sequenz von Bildern umfasst.

3. Verfahren nach Anspruch 2, wobei das Schätzen (20) das Ableiten einer globalen Bewegung aus der Sequenz von Bildern und das Verknüpfen (26) von einem oder mehreren Abschnitten der globalen Bewegung zu einem oder mehreren der erkannten mindestens einen Gegenstände umfasst, wobei die globale Bewegung eine Karte eines Bewegungsverhältnisses oder Bewegungsbetrags (56) in der gesamten Sequenz von Bildern umfasst.

4. Verfahren nach Anspruch 3, wobei die globale Bewegung basierend auf einer semantischen Maske (23) abgeleitet wird, die aus der Sequenz von Bildern erhalten wird.

5. Verfahren nach einem der Ansprüche 1 bis 4, wobei der mindestens eine Gegenstand mindestens eines von einem Menschen, einem Tier, einer Pflanze oder einer Sache umfasst oder wobei die Vorrichtung ein Fahrzeug (80) oder eine Fertigungsausrüstung ist.

6. Verfahren nach einem der Ansprüche 1 bis 5, umfassend das Verfolgen (18) des mindestens einen Gegenstands in der gesamten Sequenz.

7. Verfahren nach einem der Ansprüche 1 bis 6, ferner umfassend das Ausführen (32) eines Klassifizierungsmodells, wie etwa ein Entscheidungsbaum, um basierend auf den Bewegungsinformationen einen Indikator auszugeben, der dafür repräsentativ ist, ob sich der mindestens eine Gegenstand in einer Weise bewegt, die die Bewegung der Vorrichtung unsicher macht.

8. Verfahren nach einem der Ansprüche 1 bis 7, ferner umfassend das Ausfiltern (30) von Bewegung auf derselben Stelle aus den Bewegungsinformationen.

9. Verfahren nach einem der Ansprüche 1 bis 8, wobei die Inferenzregeln ein probabilistisches Modell zur Entscheidungsfindung basierend auf den mehreren Stücken der Bewegungsinformationen beschreiben.

10. System (84) zum Bestimmen, ob eine Vorrichtung bewegungsbereit ist, umfassend:
- ein Erhaltungsmodul (86) zum Erhalten einer Sequenz von Bildern, die sich auf die Vorrichtung beziehen,
- einen Extraktor (88) zum Extrahieren von Bewegungsinformationen aus der Sequenz von Bildern, wobei die Bewegungsinformationen Informationen über die Bewegung von mindestens einem Gegenstand in der Sequenz von Bildern umfassen,
- ein Bestimmungsmodul (90) zum Bestimmen, ob die Vorrichtung bewegungsbereit ist, basierend auf den Bewegungsinformationen, wobei das Bestimmen das Anwenden (34) einer probabilistischen Schlussfolgerung mit Inferenzregeln an mehreren Stücken der Bewegungsinformationen und das Ausgeben von mindestens einer Wahrscheinlichkeit (36), die dafür repräsentativ ist, ob die Vorrichtung bewegungsbereit ist, umfasst.

11. Fahrzeug (80), umfassend das System (84) nach Anspruch 10 und eine Kamera (82), wie etwa eine Innenkamera, wobei das Erhaltungsmodul (86) dazu ausgestaltet ist, die Sequenz von Bildern von der Kamera (82) zu erhalten, und optional wobei das Fahrzeug (80) ein autonomes Fahrzeug ist.

12. Computerprogrammsatz, beinhaltend Anweisungen zum Ausführen der Schritte des Verfahrens nach einem der Ansprüche 1 bis 9, wenn der Programmsatz von mindestens einer geeigneten Vorrichtung ausgeführt wird.

13. Aufzeichnungsmedium, das von mindestens einem Computer lesbar ist und auf dem mindestens ein Computerprogramm gespeichert ist, das Anweisungen zum Ausführen der Schritte des Verfahrens nach einem der Ansprüche 1 bis 9 auf einer geeigneten Vorrichtung beinhaltet.

## Revendications

1. Procédé mis en œuvre par ordinateur pour déterminer si un appareil est prêt à se déplacer, le procédé mis en œuvre par ordinateur comprenant les étapes suivantes :
- obtenir (10) une séquence d'images relatives à l'appareil ;
- extraire (12) des informations de mouvement à partir de la séquence d'images, dans lequel les informations de mouvement comprennent des informations sur le mouvement d'au moins un objet dans la séquence d'images ;
- déterminer (28) si l'appareil est prêt à se déplacer sur la base des informations de mouvement, dans lequel la détermination comprend l'application (34) d'un raisonnement probabiliste avec des règles d'inférence sur une pluralité d'éléments des informations de mouvement, et la sortie d'au moins une probabilité (36) représentative du fait que l'appareil soit prêt à se déplacer.

2. Procédé selon la revendication 1, dans lequel l'extraction comprend la détection (14) de l'au moins un objet dans la séquence d'images, et l'estimation d'un mouvement de l'au moins un objet sur la base de la séquence d'images.

3. Procédé selon la revendication 2, dans lequel l'estimation (20) comprend la dérivation d'un mouvement global à partir de la séquence d'images, et l'association (26) d'une ou plusieurs parties du mouvement global à un ou plusieurs du ou des objets détectés, dans lequel le mouvement global comprend une carte d'un ratio de mouvement ou d'une quantité de mouvement (56) tout au long de la séquence d'images.

4. Procédé selon la revendication 3, dans lequel le mouvement global est dérivé sur la base d'un masque sémantique (23) obtenu à partir de la séquence d'images.

5. Procédé selon l'une des revendications 1 à 4, dans lequel l'au moins un objet comprend au moins un parmi un être humain, un animal, une plante ou un article, ou dans lequel l'appareil est un véhicule (80) ou un équipement de fabrication.

6. Procédé selon l'une des revendications 1 à 5, comprenant le suivi (18) de l'au moins un objet tout au long de la séquence.

7. Procédé selon l'une des revendications 1 à 6, comprenant en outre l'exécution (32) d'un modèle de classification, tel qu'un arbre de décision, pour délivrer, sur la base des informations de mouvement, un indicateur représentatif du fait que l'au moins un objet se déplace d'une manière qui rend le mouvement de l'appareil dangereux.

8. Procédé selon l'une des revendications 1 à 7, comprenant en outre le filtrage (30) d'un mouvement sur place à partir des informations de mouvement.

9. Procédé selon l'une des revendications 1 à 8, dans lequel les règles d'inférence décrivent un modèle probabiliste pour la prise de décision basé sur la pluralité d'éléments des informations de mouvement.

10. Système (84) pour déterminer si un appareil est prêt à se déplacer, comprenant :
- un module d'obtention (86) pour obtenir une séquence d'images relatives à l'appareil ;
- un extracteur (88) pour extraire des informations de mouvement à partir de la séquence d'images, dans lequel les informations de mouvement comprennent des informations sur le mouvement d'au moins un objet dans la séquence d'images ;
- un module de détermination (90) pour déterminer si l'appareil est prêt à se déplacer sur la base des informations de mouvement, dans lequel la détermination comprend l'application (34) d'un raisonnement probabiliste avec des règles d'inférence sur une pluralité d'éléments des informations de mouvement, et la sortie d'au moins une probabilité (36) représentative du fait que l'appareil soit prêt à se déplacer.

11. Véhicule (80) comprenant le système (84) selon la revendication 10 et une caméra (82), telle qu'une caméra intérieure, dans lequel le module d'obtention (86) est configuré pour obtenir la séquence d'images à partir de la caméra (82), et facultativement dans lequel le véhicule (80) est un véhicule autonome.

12. Ensemble de programmes informatiques comportant des instructions pour exécuter les étapes du procédé selon l'une des revendications 1 à 9 lorsque ledit ensemble de programmes est exécuté par au moins un appareil approprié.

13. Support d'enregistrement lisible par au moins un ordinateur et sur lequel est enregistré au moins un programme informatique comportant des instructions pour exécuter les étapes du procédé selon l'une des revendications 1 à 9 sur un appareil approprié.
